# FASCICULE DE BREVET EUROPEEN

(11) **EP 3 532 305 B1**
(45) Date de publication et mention de la délivrance du brevet: **21.10.2020**
(21) Numéro de dépôt: 17797707.1
(22) Date de dépôt: 30.10.2017
(51) Int. Cl.: B60C 1/00, C08K 3/04, C08K 3/36, C08K 5/09, C08K 5/548, C08L 7/00, C08K 3/06, C08K 5/04, C08K 5/098

(54) **COMPOSITION DE CAOUTCHOUC COMPRENANT UNE CHARGE RENFORCANTE SPECIFIQUE**
KAUTSCHUKZUSAMMENSETZUNG MIT EINEM SPEZIFISCHEN VERSTÄRKENDEN FÜLLSTOFF
RUBBER COMPOSITION COMPRISING A SPECIFIC REINFORCING FILLER

(30) Priorité: 31.10.2016 FR 1660555
(43) Date de publication de la demande: 04.09.2019
(73) Titulaire: Compagnie Générale des Etablissements Michelin, 63000 Clermont-Ferrand (FR)
(72) Inventeur: BARBOUTEAU, Joël, 63040 Clermont-Ferrand Cedex 9 (FR); FRISCH, Auriane, 63040 Clermont-Ferrand Cedex 9 (FR); MIMA, Kazuhide, 63040 Clermont-Ferrand Cedex 9 (FR); SHIOZAWA, Natsuko, 63040 Clermont-Ferrand Cedex 9 (FR)
(74) Mandataire: Louret, Sylvain
(86) Numéro de dépôt international: PCT/FR2017/052985
(87) Numéro de publication internationale: WO 2018/078307

(56) Documents cités:
- WO-A1-2010/133492
- FR-A1- 2 869 618
- US-A1- 2014 102 611

## Description

La présente invention est relative aux compositions de caoutchouc destinées notamment à la fabrication de pneumatiques ou de produits semi-finis pour pneumatiques.

Depuis que les économies de carburant et la nécessité de protéger l'environnement sont devenues une priorité, il est souhaitable de mettre en œuvre des compositions caoutchouteuses utilisables pour la fabrication de divers produits semi-finis entrant dans la constitution d'enveloppes de pneumatiques tels que par exemple des sous-couches, des gommes de calandrage des nappes de tissu câblé ou des bandes de roulement afin d'obtenir des pneumatiques possédant une résistance au roulement réduite.

A cet effet, les manufacturiers ont développé des compositions de pneumatique permettant de diminuer cette résistance au roulement, notamment par l'introduction de silice comme charge renforçante, ou de résine de haute température de transition vitreuse comme plastifiant.

Par exemple, le document FR2729671 propose d'utiliser une silice de faible surface spécifique CTAB et BET à titre de charge renforçante dans la composition d'armature sommet de pneumatique. Par ailleurs, la Demanderesse a déjà décrit l'utilisation de résines de haute Tg, comme décrit dans les documents WO-2005/087859 ou WO-2006/061064.

Néanmoins, les manufacturiers cherchent toujours des solutions pour diminuer davantage la résistance au roulement, de préférence sans pénaliser les autres propriétés des pneumatiques, en particulier les propriétés d'adhésion.

### Exposé de l'invention

Poursuivant leurs recherches, la Demanderesse a découvert que l'utilisation d'une charge renforçante spécifique permet d'améliorer d'avantage la résistance au roulement de pneumatique, sans pénaliser, voire en améliorant, les autres propriétés de la composition, telles que la rigidité, l'adhésion de la composition à des renforts métalliques éventuellement présents, la résistance à l'usure, et sans pénaliser la mise en œuvre industrielle des compositions (processabilité).

En conséquence, un premier objet de l'invention concerne une composition de caoutchouc à base d'au moins :
- un élastomère diénique comprenant majoritairement un élastomère isoprénique ;
- une charge renforçante comprenant :
   ∘ de 15 à 70 pce de noir de carbone présentant une surface spécifique BET inférieure à 70 m²/g et/ou un COAN inférieur à 90 mL/100g, et
   ∘ de 5 à 20 pce de silice ;
- un sel d'un métal alcalino-terreux, alcalin ou lanthanide ; et
- un système de réticulation ;
dans laquelle le ratio de noir de carbone sur silice est supérieur à 1.

L'invention a également pour objet des articles en caoutchouc finis ou semi-finis pour pneumatiques et des pneumatiques comportant une composition de caoutchouc conforme à l'invention.

### Définitions

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Matrice élastomérique

La composition selon l'invention comprend au moins un élastomère diénique comprenant majoritairement au moins un élastomère isoprénique. Ainsi, la composition selon l'invention peut contenir un seul élastomère isoprénique ou un mélange d'un élastomère isoprénique avec un ou plusieurs autres élastomères diéniques, la composition étant majoritairement constituée d'élastomère isoprénique.

Par élastomère (ou « caoutchouc », les deux termes étant considérés comme synonymes) du type "diénique", on rappelle ici que doit être compris de manière connue un (on entend un ou plusieurs) élastomère issu au moins en partie (*i*.*e*., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6,013,718 et WO 2008/141702), des groupes alkoxysilane (tels que décrits par exemple dans FR2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973, WO 2009/000750 et WO 2009/000752). Comme autres exemples d'élastomères fonctionnalisés, on peut citer également des élastomères (tels que SBR, BR, NR ou IR) du type époxydés.

En résumé, l'élastomère diénique de la composition peut être choisi, par exemple, dans le groupe des élastomères diéniques fortement insaturés constitué par le caoutchouc naturel (NR), les polyisoprènes (IR) de synthèse, les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

De manière avantageuse, l'élastomère diénique de la composition n'est pas époxydé.

Selon l'invention, l'élastomère diénique comprend majoritairement au moins un élastomère isoprénique. Par "élastomère isoprénique" (ou "polyisoprène", les deux expressions étant utilisées de manière équivalente dans la présente), on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). De préférence, l'élastomère isoprénique est choisi dans le groupe constitué par du caoutchouc naturel, un polyisoprène de synthèse et un de leurs mélanges, de préférence encore, l'élastomère isoprénique est du caoutchouc naturel.

L'au moins un élastomère isoprénique est de préférence choisi dans le groupe constitué par le caoutchouc naturel, les polyisoprènes de synthèse et leurs mélanges. De préférence, l'élastomère isoprénique comporte un taux massique de liaisons cis 1,4 d'au moins 90%, plus préférentiellement d'au moins 98% par rapport à la masse de l'élastomère isoprénique.

Préférentiellement le taux d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère isoprénique, de préférence encore de caoutchouc naturel, est très préférentiellement de 100 pce.

Qu'elles contiennent un seul élastomère isoprénique ou un mélange d'au moins un élastomère isoprénique et d'un ou plusieurs élastomères diéniques, les compositions de l'invention peuvent être utilisées en association avec tout type d'élastomère synthétique autre que diénique, voire avec des polymères autres que des élastomères, par exemple des polymères thermoplastiques, étant entendu que la matrice élastomérique (incluant les élastomères diéniques et synthétiques, et les polymères précités) comprenne majoritairement de l'élastomère isoprénique. De préférence, la composition selon l'invention ne contient pas d'élastomère thermoplastique ou en contient moins de 10 pce, de préférence moins de 5 pce.

### Charge renforçante

La composition selon l'invention comprend une charge renforçante comprenant ou constituée par :
∘ de 15 à 70 pce de noir de carbone présentant une surface spécifique BET inférieure à 70 m²/g et/ou un COAN inférieur à 90 mL/100g, et
∘ de 5 à 20 pce de silice.

La surface spécifique BET des noirs de carbone est mesurée selon la norme D6556-10 [méthode multipoints (au minimum 5 points) - gaz : azote - domaine de pression relative P/P0 : 0.1 à 0.3].

Dans la présente, on entend par « noir de carbone grossier » un noir de carbone présentant une surface spécifique BET inférieure à 70 m²/g.

Les noirs de carbone utilisables dans le cadre de la présente invention peuvent être tout noir conventionnellement utilisé dans les pneumatiques ou leurs bandes de roulement (noirs dits de grade pneumatique) des séries 400, 500, 600 ou 700 (grades ASTM), comme par exemple les noirs N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch, réalisé par voie sèche ou liquide (voir par exemple demandes WO 97/36724 ou WO 99/16600).

De préférence, le noir de carbone grossier présente une surface spécifique BET inférieure à 50 m²/g, de préférence une surface spécifique BET comprise dans un domaine allant de 32 à 49 m²/g.

De préférence encore, le noir de carbone grossier présente un indice d'absorption d'huile COAN inférieur à 90 mL/100g, de préférence inférieur à 87 mL/100g, de préférence inférieur à 70 mL/100g. Avantageusement, le noir de carbone grossie présente un COAN compris dans un domaine allant de 50 à 85 mL/100g, de préférence de 55 à 85 mL/100g ou de préférence de 50 à 69 mL/100g.

Le COAN, ou indice d'absorption d'huile par des d'échantillons comprimés (« Compressed Oil Absorption Number » en anglais), des noir de carbone, est mesuré selon la norme ASTM D3493-16.

Le taux de noir de carbone grossier est compris dans un domaine allant de 15 à 70 pce. En dessous de 15 pce, il a été observé que la rigidité de la composition commence à ne plus être suffisante, alors qu'au-delà de 70 pce, les propriétés de cohésions commencent à se dégrader. De manière avantageuse, le taux de noir de carbone grossier est compris dans un domaine allant de 20 à 70 pce, de préférence de 30 à 65 pce, de préférence encore de 40 à 60 pce.

La silice utilisable dans le cadre de la présente invention peut être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m2/g.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17).

La surface spécifique CTAB de la silice est déterminée selon la norme française NF T 45-007 de novembre 1987 (méthode B).

De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 200 m²/g et/ou une surface spécifique CTAB comprise dans un domaine allant de 140 à 170 m²/g.

A titres de silices utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

Le taux de silice est compris dans un domaine allant de 5 à 20 pce. En dessous de 5 pce, il a été observé que le compromis endurance/cohésion n'est plus satisfaisant, alors qu'au-delà de 20 pce, la performance adhésive et la processabilité sont pénalisés. De manière avantageuse, le taux de silice est compris dans un domaine allant de 5 à 15 pce, de préférence de 10 à 15 pce.

Dans la composition selon l'invention, le taux total de noir de carbone et de silice est avantageusement compris entre 30 et 80 pce. En dessous de 30 pce, il a été observé que la rigidité de la composition commence à ne plus être suffisante, impactant négativement l'endurance et le comportement routier du pneumatique, alors qu'au-delà de 80 pce, la résistance au roulement est pénalisée. Avantageusement, le taux total de noir de carbone et de silice est compris entre 40 et 70 pce, de préférence entre 50 et 70 pce ou de préférence entre 40 et 60 pce.

Dans la composition selon l'invention, le ratio massique de noir de carbone sur silice est supérieur à 1, par exemple supérieure à 1,1, par exemple supérieure à 1,2. En dessous de 1, il a été observé que la performance adhésive est dégradée. Avantageusement, le ratio massique de noir de carbone sur silice est compris dans un domaine allant de 2 à 10, de préférence de 3 à 8, de préférence de 4 à 7.

L'homme du métier comprendra qu'à titre de charge équivalente de la silice décrite dans la présente, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

Pour coupler la silice renforçante à l'élastomère diénique, on utilise de manière bien connue un agent de couplage (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants: WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

On peut citer notamment les composés alkoxysilane-polysulfure, en particulier les polysulfures de bis-(trialkoxylsilylpropyle), tout particulièrement le disulfure de bis 3-triéthoxysilylpropyle (en abrégé "TESPD") et le tétrasulfure de bis 3-triéthoxysilylpropyle (en abrégé "TESPT"). On rappelle que le TESPD, de formule [(C₂H₅O)₃Si(CH₂)₃S]₂, est notamment commercialisé par la société Degussa sous les dénominations Si266 ou Si75 (dans le second cas, sous forme d'un mélange de disulfure (à 75% en poids) et de polysulfures). Le TESPT, de formule [(C₂H₅O)₃Si(CH₂)₃S]₂ est commercialisé notamment par la société Degussa sous la dénomination Si69 (ou X50S lorsqu'il est supporté à 50%) en poids sur du noir de carbone), sous la forme d'un mélange commercial de polysulfures Sₓ avec une valeur moyenne pour x qui est proche de 4.

La composition selon l'invention peut comprendre un agent de couplage ou en être exempt. Avantageusement, la composition selon l'invention ne comprend pas d'agent de couplage ou en comprend moins de 11%, de préférence, moins de 5%, de préférence, moins de 4% en masse par rapport à la masse de silice. Lorsque la composition comprend un agent de couplage, le taux d'agent de couplage peut être compris dans un domaine allant de 0,1 à 0,5 pce, de préférence de 0,1 à 0,3 pce.

### Système de réticulation

Le système de réticulation peut être à base soit de soufre moléculaire et/ou de donneurs de soufre et/ou de peroxyde et/ou de bismaléimides, bien connus de l'homme du métier. Le système de réticulation est préférentiellement un système de vulcanisation, c'est-à-dire un système à base de soufre (et/ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Avantageusement, le taux de soufre dans la composition selon l'invention est supérieur à 2,5 pce. De préférence, le taux de soufre dans la composition est compris dans un domaine allant de 3 à 10 pce, de préférence de 3 à 7 pce, de préférence encore de 4 à 6 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Sel d'un métal alcalino-terreux, alcalin ou lanthanide

La composition selon l'invention comprend un sel de métal alcalino-terreux, alcalin ou lanthanide.

Le sel d'un métal alcalino-terreux, alcalin ou lanthanide est un acétylacétonate d'un métal alcalino-terreux, alcalin ou lanthanide.

De préférence, le métal alcalino-terreux, alcalin ou lanthanide du sel est choisi dans le groupe constitué par le lithium, le sodium, le potassium, le calcium, le magnésium, le lanthane, le cérium, le praséodyme, le néodyme, le samarium, l'erbium et leurs mélanges. De préférence encore, le sel d'un métal alcalino-terreux, alcalin ou lanthanide est un sel de magnésium ou de néodyme, de préférence de magnésium. En d'autres termes, le sel d'un métal alcalino-terreux, alcalin ou lanthanide est avantageusement un acétylacétonate de magnésium ou de néodyme, de préférence un acétylacétonate de magnésium.

Le taux du sel de métal alcalino-terreux, alcalin ou lanthanide peut être compris par exemple dans un domaine allant de 0,1 à 5 pce, de préférence de 0,5 à 4 pce et plus préférentiellement de 0,5 à 2 pce.

### Additifs divers

Les compositions de caoutchouc conformes à l'invention peuvent également comporter tout ou partie des additifs usuels habituellement utilisés dans les compositions d'élastomères, comme par exemple des pigments, des agents de protection tels que cires anti-ozone, anti-ozonants chimiques, anti-oxydants, agents plastifiants, des agents anti-fatigue, des résines renforçantes, des accélérateurs secondaires de vulcanisation, des activateurs de vulcanisation, etc.

La composition selon l'invention peut également comprendre de l'acide stéarique ou un de ses sels. A titre d'exemple de sel d'acide stéarique, on peut citer le stéarate de zinc ou le stéarate de cadmium. Le taux d'acide stéarique ou d'un de ses sels peut avantageusement être compris dans un domaine allant de 0,5 à 2 pce, de préférence de 0,5 à 1 pce.

La composition selon l'invention peut en outre comprendre un sel de cobalt. Par exemple le sel de cobalt peut être choisi dans le groupe constitué par les abiétates, les acétylacétonates, les tallates, les naphténates, les résinâtes et leurs mélanges. Le taux de sel de cobalt peut avantageusement être compris dans un domaine allant de 0,5 à 2 pce, de préférence de 0,5 à 1 pce.

La composition selon l'invention peut en outre comprendre un antioxydant choisi dans le groupe constitué par les p-phénylène diamines substituées, les diphénylamines substituées, les triphénylamines substituées, les dérivés de la quinoléine, et leurs mélanges. De préférence, l'antioxydant est choisi dans le groupe constitué par les p-phénylène diamines substituées et leurs mélanges. Le taux d'antioxydant peut avantageusement être compris dans un domaine allant de 1 à 5 pce, de préférence de 2 à 3 pce.

La composition selon l'invention peut également comprendre un oxyde métallique. L'oxyde métallique peut être choisi dans le groupe constitué par les oxydes des métaux du groupe II, IV, V, VI, VII et VIII, et leurs mélanges. De préférence, l'oxyde métallique est choisi dans le groupe constitué par les oxydes de zinc, de magnésium, de cobalt, de nickel et leurs mélanges. De préférence encore, l'oxyde métallique est un oxyde de zinc. Le taux d'oxyde métallique peut avantageusement être compris dans un domaine allant de 2 à 20 pce, de préférence de 6 à 10 pce. Avantageusement, le ratio d'oxyde métallique sur l'acide stéarique ou l'un de ses sels est supérieur à 3, de préférence le ratio d'oxyde métallique sur l'acide stéarique ou l'un de ses sels est compris dans un domaine allant de 3 à 20, de préférence de 5 à 15, de préférence de 5 à 10.

Par ailleurs, la composition peut comprendre un retardateur de vulcanisation ou en être exempte. Par exemple, la composition selon l'invention peut contenir moins de 1 pce, de préférence moins de 0,6 pce, de préférence moins de 0,3 pce, de préférence moins de 0,1 pce de retardateur de vulcanisation. A titre d'exemple de retardateur de vulcanisation on peut citer le N-cyclohexylthiophtalimide (CTP), commercialisé par exemple sous dénomination « Vulkalent G » par la société Lanxess.

Avantageusement, la composition selon l'invention ne comprend pas de résorcine et/ou de dérivé de résorcine et/ou d'hexaméthylène triamine et/ou de dérivé de mélamine, ou en comprend moins de 0,5 pce, de préférence moins de 0,4 pce. De préférence encore, la composition selon l'invention ne comprend pas du tout de résine renforçante, ou en comprend moins de 0,5 pce, de préférence moins de 0,4 pce.

### Articles de caoutchouc finis ou semi-finis et pneumatiques

La présente invention a également pour objet un article de caoutchouc fini ou semi-fini, ainsi qu'un pneumatique comportant une composition selon l'invention. Sont concerné les articles et pneumatiques tant à l'état cru (c'est à dire, avant cuisson) qu'à l'état cuit (c'est à dire, après réticulation ou vulcanisation).

La présente invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes des pneumatiques.

Aussi, dans le pneumatique selon la présente invention la composition selon l'invention peut être présente dans au moins une couche interne. Selon l'invention, la couche interne peut être choisie dans le groupe constitué par les nappes carcasse, les nappes sommet, les bourrages-tringle, les pieds sommets, les couches de découplage, les gommes de bordure, la sous-couche de bande de roulement et les combinaisons de ces couches internes. De préférence, la couche interne est choisie dans le groupe constitué par les nappes carcasses, les nappes sommet, les pieds sommets, les couches de découplage, les gommes de bordures et les combinaisons de ces couches internes. Dans la présente, on entend par « gomme de bordure », une couche positionné dans le pneumatique directement au contact de l'extrémité d'une nappe de renforcement, de l'extrémité d'un élément de renforcement ou d'une autre gomme de bordure.

Selon l'invention, l'article selon l'invention ou la couche interne du pneumatique selon l'invention peut comprendre des renforts textiles ou métalliques. Il peut s'agir de tout renfort textile ou métallique connu de l'homme du métier. De manière avantageuse, l'article selon l'invention ou la couche interne du pneumatique selon l'invention comprend des mono-filaments métalliques, de préférence en acier. De préférence, le diamètre des mono-filaments métalliques est compris entre 0,20 et 0,50 mm. De préférence, la densité des mono-filaments métalliques est comprise entre 120 et 180 fils/dm.

Par ailleurs, la composition selon l'invention est particulièrement bien adaptée pour les couches de caoutchouc (10a), (10b) et (10c) décrites dans les demandes WO 2013/117476 et WO 2013/117477. Aussi, le pneumatique selon la présente invention peut également comprendre un ceinture telle que définie dans la dans la demande WO 2013/117476 ou WO 2013/117477. Le pneumatique selon l'invention peut être par exemple un pneumatique tel que défini dans la demande WO 2013/117476 ou WO 2013/117477 dans lequel une ou plusieurs des compositions (C1), (C2) ou (C3) comprennent ou sont constituées par une composition selon la présente invention.

Par exemple, le pneumatique selon l'invention peut être un pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) et dans le sommet (2), une armature de sommet ou ceinture (10) s'étendant dans le sommet (2) selon la direction circonférentielle (X) et situé radialement entre l'armature de carcasse (7) et la bande de roulement (3), ladite ceinture (10) comportant un stratifié composite multicouche (10a, 10b, 10c) comportant au moins trois couches superposées de renforts (110, 120, 130), lesdits renforts étant dans chaque couche unidirectionnels et noyés dans une épaisseur de caoutchouc (respectivement C1, C2, C3), avec :
∘ côté bande de roulement, une première couche (10a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
∘ au contact de la première couche (10a) et disposée sous cette dernière, une deuxième couche (10b) de caoutchouc (C2) comportant une deuxième rangée de renforts (120), orientés selon un angle beta donné, positif ou négatif, compris entre 10 et 30 degrés par rapport à la direction circonférentielle (X), ces renforts (120) dits deuxièmes renforts étant des renforts métalliques ;
∘ au contact de la deuxième couche (10b) et disposée sous cette dernière, une troisième couche (10c) de caoutchouc (C3) comportant une troisième rangée de renforts (130), orientés selon un angle gamma opposé à l'angle beta, lui-même compris entre 10 et 30 degrés par rapport à la direction circonférentielle (X), ces renforts (130) dits troisièmes renforts étant des renforts métalliques ;
caractérisé en ce que d'une part :
∘ les deuxièmes (120) et troisièmes (130) renforts consistent en des monofilaments en acier dont le diamètre, noté respectivement D2 et D3, est compris entre 0,20 mm et 0,50 mm ;
   et les caractéristiques suivantes, mesurées dans la partie centrale de la ceinture du pneumatique à l'état vulcanisé, de part et d'autre du plan médian (M) sur une largeur axiale totale de 4 cm, sont vérifiées :
∘ le diamètre d'encombrement moyen D1 des premiers renforts (110) est compris entre 0,40 mm et 0,70 mm ;
∘ la densité d₁ des premiers renforts (110) dans la première couche de caoutchouc (C1), mesurée dans la direction axiale (Y), est comprise entre 70 et 130 fils/dm (décimètre, c'est-à-dire par 100 mm de couche de caoutchouc) ;
∘ la densité, respectivement d₂ et d₃, des deuxièmes (120) et troisièmes (130) renforts dans respectivement les deuxième (C2) et troisième (C3) couches de caoutchouc, mesurée dans la direction axiale (Y), est comprise entre 120 et 180 fils/dm ;
∘ l'épaisseur moyenne Ez₁ de caoutchouc séparant un premier renfort (110) du deuxième renfort (120) qui lui est le plus proche, mesurée dans la direction radiale (Z), est comprise entre 0,25 et 0,40 mm ;
∘ l'épaisseur moyenne Ez₂ de caoutchouc séparant un deuxième renfort (120) du troisième renfort (130) qui lui est le plus proche, mesurée dans la direction radiale (Z), est comprise entre 0,35 et 0,60 mm ;
et en ce que d'autre part les inégalités suivantes sont vérifiées :
(1) CT < 7,5%
(2) 0,20 < Ez₁ / (Ez₁ + D1 + D2) < 0,30
(3) 0,30 < Ez₂ / (Ez₂ + D2 + D3) < 0,50
CT étant la contraction thermique des premiers renforts (110) en matériau textile thermorétractile, après 2 min à 185°C ;
pneumatique dans lequel une ou plusieurs des compositions (C1), (C2) ou (C3) comprennent ou sont constituées par une composition selon la présente invention.

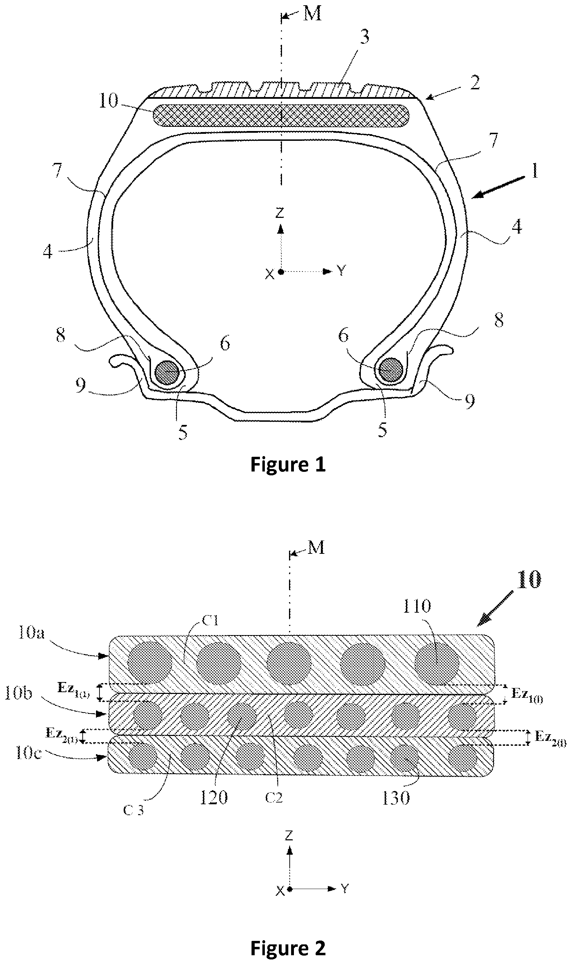

La figure 1 représente de manière très schématique (c'est-à-dire sans respect d'une échelle spécifique) une coupe radiale d'un pneumatique conforme à l'invention, par exemple pour véhicule du type tourisme ou camionnette, dont la ceinture comporte un stratifié composite multicouche selon l'invention. Ce pneumatique (1), définissant trois directions perpendiculaires, circonférentielle (X), axiale (Y) et radiale (Z), comporte un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) et dans le sommet (2), une armature de sommet ou ceinture (10) s'étendant dans le sommet (2) selon la direction circonférentielle (X) et situé radialement entre l'armature de carcasse (7) et la bande de roulement (3). L'armature de carcasse (7) est de manière connue constituée d'au moins une nappe de caoutchouc renforcée par des câblés textiles dits "radiaux", disposés pratiquement parallèles les uns aux autres et s'étendent d'un bourrelet à l'autre de manière à former un angle généralement compris entre 80° et 90° avec le plan circonférentiel médian M ; elle est ici, à titre d'exemple, enroulée autour de deux tringles (6) dans chaque bourrelet (5), le retournement (8) de cette armature (7) étant par exemple disposé vers l'extérieur du pneumatique (1) qui est ici représenté monté sur sa jante (9).

Selon l'invention, les angles β et γ de sens opposés, tous deux compris entre 10° et 30°, peuvent être identiques ou différents, c'est-à-dire que les deuxièmes (120) et troisièmes (130) renforts peuvent être disposés symétriquement ou pas de part et d'autre du plan circonférentiel médian (M) précédemment défini.

Dans ce pneumatique schématisé à la figure 1, on comprendra bien entendu que la bande de roulement 3, le stratifié multicouche 10 et l'armature de carcasse 7 peuvent être ou non au contact les uns des autres, même si ces parties ont été volontairement séparées sur la figure 1, schématiquement, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Dans le pneu de l'invention, les deuxièmes (120) et troisièmes (130) renforts consistent par définition en des monofilaments en acier dont le diamètre, respectivement noté D2 et D3, est compris entre 0,20 mm et 0,50 mm, de préférence supérieur à 0,25 mm et inférieur à 0,40 mm. Plus préférentiellement, pour une endurance optimale du pneu de l'invention, notamment sous des conditions de roulage sévères, on préfère que D2 et D3 soient compris dans un domaine de 0,28 à 0,35 mm.

Par « mono filament » ou « monofil » en acier, on entend ici tout filament unitaire en acier, quelle que soit la forme de sa section droite, dont le diamètre ou l'épaisseur D est supérieur à 100 µm, D représentant la plus petite dimension de sa section droite lorsque cette dernière n'est pas circulaire. Cette définition couvre donc aussi bien des monofilaments de forme essentiellement cylindrique (à section droite circulaire) que des mono filaments de forme différente, par exemple des monofilaments oblongs (de forme aplatie) ; dans le deuxième cas (section non circulaire), le rapport de la plus grande dimension sur la plus petite dimension de la section droite est de préférence inférieur à 50, plus préférentiellement inférieur à 30, en particulier inférieur à 20.

La figure 2 représente de manière schématique (sans respect d'une échelle spécifique), en coupe transversale, le stratifié composite multicouche (10a, 10b, 10c) utilisé comme ceinture (10) dans le pneu (1) conforme à l'invention de la figure 1.

Comme illustré à la figure 2, Ez₁ est la moyenne des épaisseurs (Ez₁₍₁₎, Ez₁₍₂₎, Ez₁₍₃₎, ..., Ez₁₍ᵢ₎) de caoutchouc séparant un premier renfort (110) du deuxième renfort (120) qui lui est le plus proche, ces épaisseurs étant chacune mesurées dans la direction radiale Z, et moyennées sur une distance axiale totale comprise entre - 2,0 cm et + 2,0 cm par rapport au centre de la ceinture (soit, par exemple au total environ 40 mesures si l'on trouve dix renforts (110) par cm dans la couche C1).

Exprimé autrement, Ez₁ est la moyenne des distances minimales Ez₁₍ᵢ₎ séparant « dos à dos » chaque premier renfort (110) du deuxième renfort (120) qui lui est le plus proche dans la direction radiale Z, cette moyenne étant calculée sur l'ensemble des premiers renforts (110) présents dans la partie centrale de la ceinture, dans un intervalle axial s'étendant entre - 2 cm et + 2 cm par rapport au plan médian M.

De même, Ez₂ est la moyenne des épaisseurs de caoutchouc (Ez₂₍₁₎, Ez₂₍₂₎, Ez₂₍₃₎, ..., Ez₂₍ᵢ₎) séparant un deuxième renfort (120) du troisième renfort (130) qui lui est le plus proche, mesurées dans la direction radiale Z, cette moyenne étant calculée sur une distance axiale totale comprise entre - 2,0 cm et + 2,0 cm par rapport au centre de la ceinture. Exprimé différemment, ces épaisseurs représentent les distances minimales qui séparent « dos à dos » le deuxième renfort (120) du troisième renfort (130) qui lui est le plus proche dans la direction radiale Z.

Exprimé différemment, Ez₂ est la moyenne des distances minimales Ez₂₍ᵢ₎ séparant « dos à dos » chaque deuxième renfort (120) du troisième renfort (130) qui lui est le plus proche dans la direction radiale Z, cette moyenne étant calculée sur l'ensemble des deuxièmes renforts (120) présents dans la partie centrale de la ceinture, dans un intervalle axial s'étendant entre - 2 cm et + 2 cm par rapport au plan médian M.

La grandeur CT est mesurée, sauf précisions différentes, selon la norme ASTM D1204-08, par exemple sur un appareil du type « TESTRITE », sous une pré-tension dite standard de 0,5 cN/tex (donc ramenée au titre ou densité linéique de l'échantillon testé). A longueur constante, on mesure également le maximum de la force de contraction (notée F_{C}) à l'aide du test ci-dessus, cette fois à une température de 180°C et sous 3% d'élongation. Cette force de contraction F_{C} est préférentiellement supérieure à 20 N (Newton). Une force de contraction élevée s'est révélée particulièrement favorable à la capacité de frettage des premiers renforts (110) en matériau textile thermorétractile, vis-à-vis de l'armature de sommet du pneumatique lorsque ce dernier s'échauffe sous une haute vitesse de roulage.

Les grandeurs CT et Fc ci-dessus peuvent être indistinctement mesurées sur les renforts textiles initiaux encollés avant leur incorporation dans le stratifié et le pneumatique, ou bien mesurée sur ces renforts une fois extraits de la zone centrale du pneumatique vulcanisé et de préférence « dégommés » (c'est-à-dire débarrassés du caoutchouc qui les enrobe dans la couche C1).

Tout matériau textile thermorétractile vérifiant les caractéristiques de contraction CT énoncées ci-dessus convient. De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Sont également utilisables, dans la mesure où ils vérifient la caractéristique CT préconisée, des renforts hybrides constitués de deux (au moins deux) matériaux différents tels que par exemple des câblés hybrides aramide/nylon, aramide/polyester, aramide/polycétone.

Selon un mode de réalisation particulièrement préférentiel, le matériau textile thermorétractile est un polyester, notamment PET ou PEN, tout particulièrement un PET. Plus préférentiellement encore, le polyester utilisé est un PET HMLS (« *High Modulus Low Shrinkage »).*

Les premiers renforts en matériau thermorétractile peuvent avoir toute forme connue, il peut s'agir certes de monofilaments mais le plus souvent ils sont constitués de fibres multifilamentaires retordues ensemble sous forme de cordes textiles. On entend de manière usuelle par diamètre d'encombrement le diamètre du cylindre de révolution imaginaire qui entoure de tels premiers renforts dans le cas général où ces derniers ne sont pas à section droite circulaire (contrairement au cas simple de filaments unitaires).

Les premiers renforts (110) en matériau textile thermorétractile peuvent prendre toute forme connue, il peut d'agir par exemple de mono filaments élémentaires de diamètre important (par exemple égal ou supérieur à 50 µm), de fibres multifilamentaires (constituées d'une pluralité de filaments élémentaires de faible diamètre, typiquement inférieur à 30 µm), de retors textiles formés de plusieurs fibres retordues ensemble, de câbles textiles formés de plusieurs fibres ou monofilaments câblés ou retordus ensemble.

Par définition, les deuxièmes (120) et troisièmes (130) renforts sont par définition des mono filaments en acier. De préférence, l'acier est un acier au carbone tel que ceux utilisés dans les câbles type *"steel cords"* pour pneumatiques ; mais il est bien entendu possible d'utiliser d'autres aciers, par exemple des aciers inoxydables, ou d'autres alliages.

Selon un mode de réalisation préférentiel, lorsqu'un acier au carbone est utilisé, sa teneur en carbone (% en poids d'acier) est comprise dans un domaine de 0,8% à 1,2% ; selon un autre mode de réalisation préférentiel, la teneur en carbone de l'acier est comprise dans un domaine de 0,6% à 0,8%. L'invention s'applique en particulier à des aciers du type *steel cord* à résistance normale (dit "NT" pour "*Normal Tensile"*) ou à haute résistance (dit "HT" pour "*High Tensile"*), les (deuxièmes et troisièmes) renforts en acier au carbone possédant alors une résistance en traction (Rm) qui est de préférence supérieure à 2000 MPa, plus préférentiellement supérieure à 2500 MPa. L'invention s'applique également à des aciers du type *steel cord* à très haute résistance (dit "SHT" pour *"Super High Tensile"*), ultra-haute résistance (dit "UHT" pour *"Ultra High Tensile"* ou "MT" pour *"Mega Tensile"*), les (deuxièmes et troisièmes) renforts en acier au carbone possédant alors une résistance en traction (Rm) qui est de préférence supérieure à 3000 MPa, plus préférentiellement supérieure à 3500 MPa. L'allongement total à la rupture (At) de ces renforts, somme de l'allongement élastique et de l'allongement plastique, est de préférence supérieur à 2,0%.

Pour ce qui concerne les renforts (deuxième et troisièmes) en acier, les mesures de force à la rupture, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en œuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

### Préparation des compositions de caoutchouc

Les compositions utilisées dans le cadre de la présente invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (un élastomère diénique, charge renforçante), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

La première étape de malaxage est généralement réalisée en incorporant la charge renforçante à l'élastomère en une ou plusieurs fois en malaxant thermomécaniquement. Dans le cas où la charge renforçante, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch, ainsi que les additifs autres que le système de réticulation.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

### EXEMPLES

### I. Mesures et tests utilisés

### 1.1 Propriétés dynamiques

La propriété dynamique tan(δ)max a été mesurée sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz et à la température de 40°C, selon la norme ASTM D 1349-99. On a effectué un balayage en amplitude de déformation de 0,1 à 50% (cycle aller), puis de 50% à 0,1% (cycle retour). Le résultat exploité est le facteur de perte (tanδ). Pour le cycle retour, on a indiqué la valeur maximale de tanδ observée (tan(δ)max), entre les valeurs à 0,1% et à 50% de déformation (effet Payne). On rappelle que, de manière bien connue, plus la valeur de tan(δ)max à 40°C est basse, plus la composition aura une hystérèse faible et donc une résistance au roulement améliorée.

### 1.2 Test d'adhésion

On a réalisé un test d'arrachement conformément à la norme ASTM D2229 sur des éprouvettes comprenant des câbles métalliques de structure 2.30NF dont une portion est intercalée entre deux bandes réalisées dans une composition de caoutchouc et une autre portion est laissée libre. On a mesuré la force nécessaire pour arracher le câble des deux bandes de caoutchouc. La mesure a été réalisée pour 15 câbles. La valeur retenue était la moyenne des mesures sur ces 15 câbles. Plus la valeur de la force est élevée plus l'adhésion entre le câble et la composition de caoutchouc est grande. Le test d'adhésion décrit ci-dessus a été réalisé avec des éprouvettes cuites pendant une durée inférieure à 1 heure à une température supérieure à 100°C et vieillie pendant plusieurs jours à une température supérieure à 30°C et à plus de 50% d'humidité relative.

### II. Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, l'élastomère thermoplastique styrénique, la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé. Dans le cas où des renforts métalliques sont présents dans la composition, on a procédé de manière bien connue de l'homme du métier, par calandrage des renforts métalliques entre deux couches de composition de caoutchouc à l'état cru (non vulcanisé) ayant chacune une épaisseur d'environ 1 mm.

### III. Essais de compositions de caoutchouc

Six compositions de caoutchouc ont été préparées comme indiqué précédemment, dix conformes à l'invention (notées ci-après C1 à C4) et deux non conformes (composition témoin notée ci-après T1 et T2). Leurs formulations (en pce) et leurs propriétés ont été résumées dans le tableau 1 ci-après. La surface spécifique BET et le COAN des noirs de carbone utilisés dans ces formulations sont précisées dans le tableau 2.

La composition témoin T1 est une composition classiquement utilisée dans les bandes de roulement de pneumatique afin de réduire la résistance au roulement.

Les résultats de tan(δ)max sont présentés en base 100 par rapport à la composition témoin T1. Plus la valeur plus de tan(δ)max à 40°C base 100 est basse, plus la composition aura une hystérèse faible et donc une résistance au roulement améliorée.

**Tableau 1 : Formulations testées et résultats associés**

| | **T1** | **C1** | **C2** | **C3** | **C4** |
|---|---|---|---|---|---|
| NR (1) | 100 | 100 | 100 | 100 | 100 |
| N326 (2) | 55 | - | - | - | - |
| N550 (2) | - | 47 | 57 | 52 | 47 |
| Silice (3) | - | 10 | 10 | 15 | 20 |
| DPG (4) | | 1 | 1 | 1 | 1 |
| 6PPD (5) | 3 | 3 | 3 | 3 | 3 |
| Ac. stéar.(6) | 0.6 | 0.6 | 0.6 | 0.6 | 0.6 |
| ZnO (7) | 8 | 8 | 8 | 8 | 8 |
| Acac(Mg) (8) | 1.8 | 1.8 | 1.8 | 1.8 | 1.8 |
| Sel de Co (9) | 1 | 1 | 1 | 1 | 1 |
| Soufre | 5 | 5 | 5 | 5 | 5 |
| TBBS (10) | 0.8 | 0.8 | 0.8 | 0.8 | 0.8 |
| | | | | | |
| Tan δ max retour à 40°C | 100 | 54 | 73 | 65 | 67 |

| | | | | | |
|---|---|---|---|---|---|
| (1) Caoutchouc Naturel (2) Noir de carbone N326, N550 (dénomination selon la norme ASTM D-1765) (3) Silice « Zeosil 160MP » commercialisée par Rhodia (4) Diphénylguanidine « Perkacit DPG » de la société Flexsys (5) N-1,3-diméthylbutyl-N-phénylparaphénylènediamine (Santoflex 6-PPD de la société Flexsys) (6) Stéarine (« Pristerene 4931 » de la société Uniqema) (7) Oxyde de zinc (grade industriel - société Umicore) (8) Acétylacétonate de magnésium « NACEM Magnésium » (CAS 68488-07-3) de la société Niho Kagaku Sangyo (9) Naphténate de cobalt - No. produit 60830 de la société Fluka (10) N-ter-butyl-2-benzothiazyle sulfénamide « Santocure TBBS » de la société Flexsys | | | | | |

**Tableau 2 : Surfaces spécifiques et COAN des noirs de carbone utilisés**

| **Noirs de carbone** | **Surface spécifique BET (m²/g)** | **COAN (mL/100g)** |
|---|---|---|
| N326 | 78 | 68 |
| N550 | 39 | 85 |

Les résultats présentés dans le tableau 1 montrent que les compositions conformes à l'invention permettent toutes d'améliorer la résistance au roulement. Par ailleurs, il a été constaté que les compositions conformes à la présente invention présentes de bonnes propriétés d'adhésion.

## Revendications

1. Composition de caoutchouc à base d'au moins :
- un élastomère diénique comprenant majoritairement un élastomère isoprénique ;
- une charge renforçante comprenant :
∘ de 15 à 70 parties en poids pour cent parties en poids d'élastomère, pce, de noir de carbone présentant une surface spécifique BET inférieure à 70 m²/g, et
∘ de 5 à 20 pce de silice ;
- un sel d'un métal alcalino-terreux, alcalin ou lanthanide ; et
- un système de réticulation ;
dans laquelle le ratio de noir de carbone sur silice est supérieur à 1, et dans laquelle le sel d'un métal alcalino-terreux, alcalin ou lanthanide est un acétylacétonate d'un métal alcalino-terreux, alcalin ou lanthanide.

2. Composition de caoutchouc selon la revendication 1, dans laquelle le taux d'élastomère isoprénique est compris dans un domaine allant de 60 à 100 pce, de préférence de 70 à 100 pce.

3. Composition de caoutchouc selon l'une quelconque des revendications 1 à 2, dans laquelle le noir de carbone présente une surface spécifique BET inférieure à 50 m²/g, de préférence une surface spécifique BET comprise dans un domaine allant de 32 à 49 m²/g.

4. Composition de caoutchouc selon l'une quelconque des revendications 1 à 3, dans laquelle le noir de carbone présente un indice d'absorption d'huile COAN inférieur à 90 mL/100g, de préférence inférieur à 87 mL/100g, de préférence un COAN compris dans un domaine allant de 50 à 85 mL/100g.

5. Composition de caoutchouc selon l'une quelconque des revendications 1 à 4, dans laquelle le ratio de noir de carbone sur silice est compris dans un domaine allant de 2 à 10, de préférence de 3 à 8.

6. Composition de caoutchouc selon l'une quelconque des revendications 1 à 5, dans laquelle le sel d'un métal alcalino-terreux, alcalin ou lanthanide est un sel de magnésium ou de néodyme, de préférence de magnésium.

7. Composition de caoutchouc selon l'une quelconque des revendications 1 à 6, dans laquelle le taux du sel de métal alcalino-terreux, alcalin ou lanthanide est compris dans un domaine allant de 0,1 à 5 pce, de préférence de 0,5 à 4 pce.

8. Composition de caoutchouc selon l'une quelconque des revendications 1 à 7, comprenant en outre de l'acide stéarique ou un de ses sels.

9. Composition de caoutchouc selon l'une quelconque des revendications 1 à 8, comprenant en outre un sel de cobalt.

10. Composition de caoutchouc selon l'une quelconque des revendications 1 à 9, comprenant en outre un antioxydant choisi dans le groupe constitué par les p-phénylène diamines substituées, les diphénylamines substituées, les triphénylamines substituées, les dérivés de la quinoléine, et leurs mélanges.

11. Composition de caoutchouc selon l'une quelconque des revendications 1 à 10, comprenant en outre un oxyde métallique choisi dans le groupe constitué par les oxydes des métaux des groupes II, IV, V, VI, VII et VIII, et leurs mélanges.

12. Composition de caoutchouc selon la revendication 11 lorsqu'elle dépend de la revendication 8, dans laquelle le ratio d'oxyde métallique sur l'acide stéarique ou l'un de ses sels est supérieur à 3, de préférence le ratio d'oxyde métallique sur l'acide stéarique ou l'un de ses sels est compris dans un domaine allant de 3 à 20, de préférence de 5 à 15.

13. Composition de caoutchouc selon l'une quelconque des revendications 1 à 12, dans laquelle le système de réticulation comprend du soufre moléculaire et/ou un agent donneur de soufre.

14. Article de caoutchouc fini ou semi-fini comportant une composition de caoutchouc selon l'une quelconque des revendications 1 à 13.

15. Pneumatique comprenant une composition de caoutchouc selon l'une quelconque des revendications 1 à 13.

## Patentansprüche

1. Kautschukzusammensetzung auf Basis von mindestens:
- einem Dienelastomer, das mehrheitlich ein Isoprenelastomer umfasst;
- einem verstärkenden Füllstoff, umfassend:
∘ 15 bis 70 Gewichtsteile pro hundert Gewichtsteile Elastomer, phe, Ruß mit einer spezifischen BET-Oberfläche von weniger als 70 m²/g und
o 5 bis 20 phe Kieselsäure;
- einem Salz eines Erdalkali-, Alkali- oder Lanthanidmetalls und
- einem Vernetzungssystem;
wobei das Verhältnis von Ruß zu Kieselsäure größer als 1 ist und wobei es sich bei dem Salz eines Erdalkali-, Alkali- oder Lanthanidmetalls um ein Acetylacetonat eines Erdalkali-, Alkali- oder Lanthanidmetalls handelt.

2. Kautschukzusammensetzung nach Anspruch 1, wobei der Gehalt an Isoprenelastomer in einem Bereich von 60 bis 100 phe, vorzugsweise von 70 bis 100 phe, liegt.

3. Kautschukzusammensetzung nach einem der Ansprüche 1 bis 2, wobei der Ruß eine spezifische BET-Oberfläche von weniger als 50 m²/g aufweist, vorzugsweise eine spezifische BET-Oberfläche in einem Bereich von 32 bis 49 m²/g liegt.

4. Kautschukzusammensetzung nach einem der Ansprüche 1 bis 3, wobei der Ruß eine COAN-Ölabsorptionszahl von weniger als 90 ml/100 g, vorzugsweise weniger als 87 ml/100 g, aufweist, vorzugsweise eine COAN in einem Bereich von 50 bis 85 ml/100 g liegt.

5. Kautschukzusammensetzung nach einem der Ansprüche 1 bis 4, wobei das Verhältnis von Ruß zu Kieselsäure in einem Bereich von 2 bis 10, vorzugsweise von 3 bis 8, liegt.

6. Kautschukzusammensetzung nach einem der Ansprüche 1 bis 5, wobei es sich bei dem Salz eines Erdalkali-, Alkali- oder Lanthanidmetalls um ein Magnesium- oder Neodymsalz, vorzugsweise ein Magnesiumsalz, handelt.

7. Kautschukzusammensetzung nach einem der Ansprüche 1 bis 6, wobei der Gehalt des Erdalkali-, Alkali- oder Lanthanidmetallsalzes in einem Bereich von 0,1 bis 5 phe, vorzugsweise von 0,5 bis 4 phe, liegt.

8. Kautschukzusammensetzung nach einem der Ansprüche 1 bis 7, die außerdem Stearinsäure oder ein Salz davon umfasst.

9. Kautschukzusammensetzung nach einem der Ansprüche 1 bis 8, die außerdem ein Cobaltsalz umfasst.

10. Kautschukzusammensetzung nach einem der Ansprüche 1 bis 9, die außerdem ein Antioxidans aus der Gruppe bestehend aus substituierten p-Phenylendiaminen, substituierten Diphenylaminen, substituierten Triphenylaminen, Chinolinderivaten und Mischungen davon umfasst.

11. Kautschukzusammensetzung nach einem der Ansprüche 1 bis 10, die außerdem ein Metalloxid aus der Gruppe bestehend aus den Oxiden von Metallen der Gruppen II, IV, V, VI, VII und VIII und Mischungen davon umfasst.

12. Kautschukzusammensetzung nach Anspruch 11, wenn er von Anspruch 8 abhängig ist, wobei das Verhältnis von Metalloxid zu Stearinsäure oder einem Salz davon größer als 3 ist, vorzugsweise das Verhältnis von Metalloxid zu Stearinsäure oder einem Salz davon in einem Bereich von 3 bis 20, vorzugsweise von 5 bis 15, liegt.

13. Kautschukzusammensetzung nach einem der Ansprüche 1 bis 12, wobei das Vernetzungssystem molekularen Schwefel und/oder einen Schwefeldonor umfasst.

14. Kautschukerzeugnis oder -halbzeug, umfassend eine Kautschukzusammensetzung nach einem der Ansprüche 1 bis 13.

15. Reifen, umfassend eine Kautschukzusammensetzung nach einem der Ansprüche 1 bis 13.

## Claims

1. Rubber composition based on at least:
- a diene elastomer comprising mainly an isoprene elastomer;
- a reinforcing filler comprising:
∘ from 15 to 70 parts by weight per hundred parts by weight of elastomer, phr, of carbon black having a BET specific surface area of less than 70 m²/g, and
∘ from 5 to 20 phr of silica;
- a salt of an alkaline-earth, alkali, or lanthanide metal; and
- a crosslinking system;
in which the ratio of carbon black to silica is greater than 1, and wherein the salt of an alkaline-earth, alkali, or lanthanide metal is an acetylacetonate of a alkaline-earth, alkali, or lanthanide metal.

2. Rubber composition according to Claim 1, in which the content of isoprene elastomer is within a range extending from 60 to 100 phr, preferably from 70 to 100 phr.

3. Rubber composition according to any one of Claims 1 to 2, in which the carbon black has a BET specific surface area of less than 50 m²/g, preferably a BET specific surface area within a range extending from 32 to 49 m²/g.

4. Rubber composition according to any one of Claims 1 to 3, in which the carbon black has a COAN oil absorption number of less than 90 ml/100 g, preferably less than 87 ml/100 g, preferably a COAN within a range extending from 50 to 85 ml/100 g.

5. Rubber composition according to any one of Claims 1 to 4, in which the carbon black to silica ratio is within a range extending from 2 to 10, preferably from 3 to 8.

6. Rubber composition according to any one of Claims 1 to 5, in which the salt of an alkaline-earth, alkali or lanthanide metal is a magnesium salt or a neodymium salt, preferably a magnesium salt.

7. Rubber composition according to any one of Claims 1 to 6, in which the content of the alkaline-earth, alkali or lanthanide metal salt is within a range extending from 0.1 to 5 phr, preferably from 0.5 to 4 phr.

8. Rubber composition according to any one of Claims 1 to 7, also comprising stearic acid or a salt thereof.

9. Rubber composition according to any one of Claims 1 to 8, also comprising a cobalt salt.

10. Rubber composition according to any one of Claims 1 to 9, also comprising an antioxidant selected from the group consisting of substituted p-phenylenediamines, substituted diphenylamines, substituted triphenylamines, quinoline derivatives, and mixtures thereof.

11. Rubber composition according to any one of Claims 1 to 10, also comprising a metal oxide selected from the group consisting of oxides of group II, IV, V, VI, VII and VIII metals, and mixtures thereof.

12. Rubber composition according to Claim 11 when it is dependent on Claim 8, in which the ratio of metal oxide to stearic acid or a salt thereof is greater than 3, preferably the ratio of metal oxide to stearic acid or a salt thereof is within a range extending from 3 to 20, preferably from 5 to 15.

13. Rubber composition according to any one of Claims 1 to 12, in which the crosslinking system comprises molecular sulfur and/or a sulfur donor.

14. Finished or semi-finished rubber article comprising a rubber composition according to any one of Claims 1 to 13.

15. Tyre comprising a rubber composition according to any one of Claims 1 to 13.
